# FASCICULE DE BREVET EUROPEEN

(11) **EP 1 923 758 B1**
(45) Date de publication et mention de la délivrance du brevet: **17.03.2010**
(21) Numéro de dépôt: 07120639.5
(22) Date de dépôt: 14.11.2007
(51) Int. Cl.: G05B 19/4067, G05B 19/05

(54) **Procédé de commande d'un système d'automatisme**
Steuerungsvorrichtung für ein Automatisierungssystem
Control device for an automation system

(30) Priorité: 14.11.2006 FR 0654893
(43) Date de publication de la demande: 21.05.2008
(73) Titulaire: Schneider Electric Industries SAS, 92500 Rueil-Malmaison (FR)
(72) Inventeur: Meftah, Tewfik, 38000 Grenoble (FR); Boutin, Véronique, 38700 Le Sappey en Chartreuse (FR); Gueguen, Hervé, 35510 Cesson-Sevigné (FR)
(74) Mandataire: Dufresne, Thierry

(56) Documents cités:
- EP-A1- 0 118 988
- EP-A2- 0 418 714
- US-A- 5 111 383
- US-A- 5 369 569
- US-A- 5 984 506

## Description

La présente invention se rapporte à un procédé de commande d'un système d'automatisme, permettant en particulier de générer automatiquement et d'exécuter une séquence de reprise optimisée, suite à une interruption du cycle nominal de fonctionnement provoquée par exemple par un arrêt volontaire, une alarme ou une coupure d'alimentation. L'invention est plus particulièrement destinée aux systèmes d'automatisme industriels, chargés notamment de commander et surveiller des process automatisé de type manufacturier.

Un système d'automatisme industriel comprend généralement au moins une unité de commande, tel qu'un automate programmable (ou PLC : Programmable Logical Controller), qui reçoit des signaux d'entrées, exécute un programme d'application et met à jour des signaux de sorties. Typiquement, les signaux d'entrées sont reliés à des capteurs du process automatisé via un ou plusieurs modules d'entrées de l'automate, et les signaux de sorties sont reliés à des actionneurs du process via un ou plusieurs modules de sorties de l'automate. Souvent, un système d'automatisme industriel comprend également divers moyens de dialogue opérateur (ou HMI : Human Machine Interface) et des moyens de communication de l'automate vers l'extérieur (réseaux ou bus de communication).

Un process automatisé peut être décomposé en une partie opérative et une partie commande. La partie commande comprend les différents capteurs et actionneurs qui sont reliés aux modules d'entrées/sorties du système d'automatisme. La partie opérative correspond à la partie qui est commandée et surveillée par les capteurs /actionneurs de la partie commande, c'est-à-dire généralement les machines, moteurs, vérins ou autres dispositifs mécaniques. Dans un process de type manufacturier par exemple, la partie opérative effectue des tâches de transformation sur des matériaux, produits ou pièces à transformer (dénommés par la suite "produit entrant"), pour fournir en sortie des produits ou pièces transformés (dénommés par la suite "produit sortant"). Ces tâches de transformation se déroulent suivant un ou plusieurs cycles de transformation comprenant une ou plusieurs séquences et sont pilotées par le programme d'application exécuté par l'unité de commande du système d'automatisme.

Par exemple, un process simple d'alésage de pièces reçoit en entrée un produit entrant qui est une pièce à usiner et fournit en sortie un produit sortant qui correspond à la pièce usinée. La transformation du produit est effectuée à l'aide d'une partie opérative telle qu'une fraiseuse ou autre. De même, un process simple de manutention de pièces comprend en entrée un produit entrant (produit positionné dans une zone d'entrée) et en sortie le produit sortant (produit positionné dans une zone de sortie), à l'aide d'une partie opérative telle qu'un portique ou autre, qui transforme le produit entrant en produit sortant.

La présente invention pourrait également s'appliquer de façon similaire dans un process de type continu. Si, par exemple, la partie opérative d'un tel process continu est chargé d'effectuer des tâches de transformation chimique sur un composé chimique contenu dans une cuve, l'expression "produit entrant" définie ci-dessus correspondrait au composé chimique avant transformation par la partie opérative et l'expression "produit sortant" correspondrait au composé chimique après transformation.

Généralement, la commande d'un tel process automatisé suit un cycle nominal de fonctionnement comportant une succession de séquences dont certaines peuvent être exécutées en parallèle. L'unité de commande exécute les séquences de ce cycle nominal en fonction de conditions d'enchaînements entre séquences (transitions) et de conditions générales de sécurité. Plusieurs méthodes de description, de programmation et de visualisation existent pour réaliser un tel programme séquentiel, comme par exemple le GRAFCET, qui est un outil conforme à la norme IEC60848, dont le langage SFC (Sequential Function Chart) de la norme IEC61131-3 s'inspire.

Lorsque durant l'exécution d'un cycle nominal, il survient un arrêt provoqué indifféremment soit par un arrêt volontaire, un défaut, une alarme ou une coupure d'alimentation, la partie opérative du process se trouve aléatoirement dans une situation courant ne permettant pas une reprise immédiate du cycle nominal. Quand les conditions de fonctionnement sont rétablies, il faut pouvoir redémarrer de façon simple, sûre et dans un temps optimisé. Or, durant la période d'arrêt, différents événements ont pu survenir : ces événements ont pu par exemple modifier les conditions d'enchaînements entre séquences et/ou les conditions de sécurité, ce qui peut empêcher une reprise directe du cycle nominal là où il avait été interrompu. Il faut alors souvent l'intervention d'un opérateur dûment qualifié pour remettre manuellement l'installation dans un état connu afin de pouvoir reprendre le cycle normalement. Ces interventions sont notamment coûteuses en temps.

Il existe déjà des solutions dans lesquelles un automate programmable est capable de fournir à un opérateur, par exemple via une interface homme/machine, des informations nécessaires pour l'aider à redémarrer manuellement son installation après interruption, voir notamment le document US2006/031715. Le cycle nominal d'un process est décrit et mémorisé sous forme d'étapes et de conditions pour l'exécution de ces étapes. Lors d'une reprise après interruption, on peut comparer l'état en cours des conditions réelles avec l'état des conditions mémorisées pour la réalisation d'une étape déterminée et indiquer les incohérences entre ces états pour aider l'opérateur à y remédier.

Le document EP0118988A1 décrit un système de redémarrage d'une machine outil, permettant de redémarrer un cycle de perçage après une interruption survenant lors du cycle, grâce notamment à des moyens de détection de l'état d'avancée du cycle au moment de l'interruption.

Néanmoins, il serait avantageux de proposer une méthode qui permette non seulement de décrire un cycle nominal de fonctionnement du process automatisé, mais qui permette aussi de pouvoir revenir automatiquement vers un état cible appartenant à ce cycle nominal, à partir de la connaissance d'un état courant du process automatisé au moment d'une interruption, libérant ainsi l'opérateur d'une tâche délicate de gestion des reprises de cycle.

C'est pourquoi, l'invention décrit un procédé de commande d'un système d'automatisme qui comprend une unité de commande reliée à des capteurs et des actionneurs pour commander une partie opérative selon un cycle nominal de fonctionnement, laquelle partie opérative reçoit un produit à l'état entrant pour le transformer en un produit à l'état sortant. Le procédé de commande comporte une étape de construction d'un espace d'états réel, comprenant l'ensemble des états de la partie opérative et l'ensemble des transitions possibles entre états de la partie opérative, ainsi que l'ensemble des états de transformation du produit et des états de présence du produit. Le procédé de commande comporte, à partir dudit espace d'états réel, une étape de génération automatique d'une séquence de reprise optimisée qui est exécutée par l'unité de commande suite à une interruption du cycle nominal.

Grâce à l'invention, la description du fonctionnement intègre alors des informations complémentaires relatives aux produits à transformer par le process automatisé, de façon à pouvoir s'assurer que l'état cible appartenant au cycle nominal satisfera non seulement les conditions liées à la partie opérative mais également les conditions liées à l'état des produits à transformer. Ainsi, il sera possible de faire la distinction entre deux états identiques des éléments de la partie opérative, en prenant compte en plus de l'état de transformation et de présence du produit à transformer, de façon à déterminer la bonne séquence de reprise à effectuer suite à une interruption.

D'autres caractéristiques et avantages vont apparaître dans la description détaillée qui suit en se référant à un mode de réalisation donné à titre d'exemple et représenté par les dessins annexés sur lesquels :
- la figure 1 schématise un exemple simplifié d'une partie opérative d'un process automatisé,
- la figure 2 donne une représentation graphique des états et des transitions de la partie opérative de la figure 1,
- la figure 3 montre un cycle nominal de fonctionnement sur la représentation graphique de la figure 2,
- les figures 4 & 5 détaillent deux exemples d'une séquence de reprise optimisée.

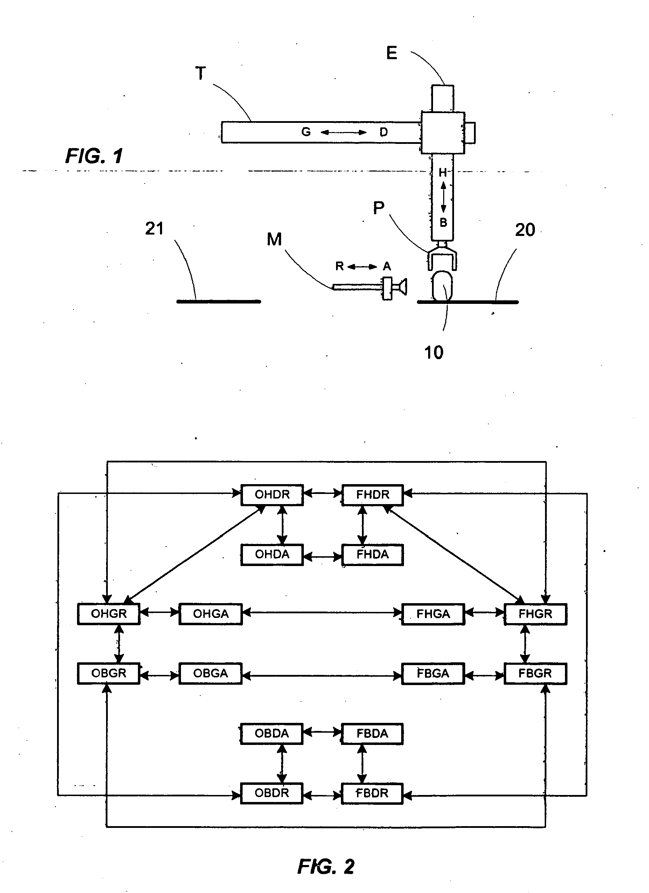

En référence à la figure 1, un exemple simple de process automatisé est composé d'une unité de transfert et de marquage de pièces. La partie opérative de ce process comporte les éléments suivants : un Elévateur E et un Translateur T pour la manutention de pièces 10, une Pince P pour la préhension des pièces et un Marqueur M pour le marquage des pièces. Les produits à l'état entrant (produits à transformer) sont des pièces 10 non-marquées placées dans une zone d'entrée 20 à une extrémité de l'unité de transfert et les produits à l'état sortant (produits transformés) sont les pièces 10 marquées placées dans une zone de sortie 21 à l'autre extrémité de l'unité de transfert. L'approvisionnement des pièces en zone d'entrée 20 et l'enlèvement des pièces en zone de sortie 21 sont effectués par d'autres process distincts coopérant avec le process étudié.

Le système d'automatisme de ce process automatisé utilise par exemple un automate programmable (PLC) qui comprend notamment une unité de commande exécutant un programme application, lequel est mémorisé dans une mémoire reliée à l'unité de commande, et des modules d'entrées/sorties reliés à différents capteurs et actionneurs pour contrôler, commander et surveiller la partie opérative du process automatisé. L'automate programmable peut également comporter divers modules d'interface avec une unité de dialogue homme-machine, avec un réseau de communication ou autres.

Le tableau 1 ci-dessous représente les séquences d'un cycle nominal de fonctionnement de la partie opérative du process. Chaque ligne correspond à une séquence du cycle nominal de fonctionnement. Sur une même ligne, on trouve l'action du cycle à engager ainsi que les états de la partie opérative, les états de présence pièce et les états de transformation pièce à la fin de cette action. Ces états correspondent à des conditions de lancement pour l'action de la ligne suivante. Pour des raisons de simplification, les conditions d'initialisation et les conditions permanentes de sécurité ne sont pas retranscrites dans ce tableau.

**Tableau 1**

| | **Actions du cycle nominal** | **Etats Partie opérative** | | | | **Etats Présence Pièce** | | | **Etat Transformation Pièce sur pince P** |
|---|---|---|---|---|---|---|---|---|---|
| | | **Pince P** | **Elévateur E** | **Translateur T** | **Marqueur M** | **Pièce en Entrée 20** | **Pièce sur Pince P** | **Pièce en Sortie 21** | |
| **1** | **Descendre E** | **O**uvert | **B**as | **D**roite | **R**eculé | Oui | Non | x | x |
| **2** | **Fermer P** | **F**ermé | **B**as | **D**roite | **R**eculé | Non | Oui | x | Non-marqué |
| **3** | **Avancer M** | **F**ermé | **B**as | **D**roite | **A**vancé | Non | Oui | x | Marqué |
| **4** | **Reculer M** | **F**ermé | **B**as | **D**roite | **R**eculé | Non | Oui | x | Marqué |
| **5** | **Monter E** | **F**ermé | **H**aut | **D**roite | **R**eculé | Non | Oui | x | Marqué |
| **6** | **Aller à Gauche T** | **F**ermé | **H**aut | **G**auche | **R**eculé | x | Oui | Non | Marqué |
| **7** | **Descendre E** | **F**ermé | **B**as | **G**auche | **R**eculé | x | Oui | Non | Marqué |
| **8** | **Ouvrir P** | **O**uvert | **B**as | **G**auche | **R**eculé | x | Non | Oui | x |
| **9** | **Monter E** | **O**uvert | **H**aut | **G**auche | **R**eculé | x | Non | Oui | x |
| **10** | **Aller à Droite** T | **O**uvert | **H**aut | **D**roite | **R**eculé | x | Non | x | x |

Pour exécuter un cycle nominal de fonctionnement du process, il faut déterminer pour chaque action susceptible d'être effectuée par la partie opérative durant ce cycle nominal :
- les conditions de lancement et d'arrêt de cette action, ces conditions étant liées au séquencement du cycle nominal,
- les conditions permanentes de réalisation de cette action, liées notamment à la sécurité,
- les conséquences de cette action sur l'état de la partie opérative, l'état de transformation et l'état de présence du ou des produits affectés par cette action.

Ainsi, pour effectuer par exemple l'action d'avancée du marqueur M (ligne 3 du tableau 1 ci-dessus), il faut au préalable les conditions de lancement suivantes : Pince P à l'état Fermé, Elévateur E à l'état Bas, Marqueur M à l'état Reculé, Translateur T à l'état Droite, présence d'une Pièce à l'état Non-marqué sur la Pince, absence ou présence d'une Pièce en zone de Sortie (c'est-à-dire que cette condition, notée x, est sans influence pour exécuter cette action). La condition d'arrêt de la fin de l'action d'avancée du marqueur M sera la détection de l'état Avancé du Marqueur. La conséquence sur l'état de transformation Pièce sera le passage de la Pièce de l'état Non-marqué à l'état Marqué.

D'autres représentations du cycle nominal pourraient être utilisées de façon équivalente, comme un diagramme temporel de cycle. Par ailleurs, pour des raisons de simplification, cette représentation est basée sur le principe que le process n'effectue qu'une seule action à la fois.

La figure 2 donne une représentation de l'ensemble des états identifiés possibles de la partie opérative. Ces états sont représentés par l'état des quatre actionneurs de l'exemple choisi. Ainsi l'état «OHDR» signifie que la Pince P est Ouverte, l'Elévateur E est en Haut, le Translateur T est à Droite et le Marqueur M est Reculé. La figure 2 donne également une représentation de l'ensemble des transitions dites possibles entre les différents états de la partie opérative, à l'aide de flèches mono ou bidirectionnelles. Pour des raisons de simplification de la figure 2, les états de transformation et de présence du produit ne sont pas représentés.

Les transitions possibles sont définies comme étant les transitions réalisables entre des états de la partie opérative, compte tenu des contraintes mécaniques et des conditions de sécurité permanentes. Ainsi, on voit par exemple qu'il n'est pas possible de passer directement de l'état OBDA à l'état OBGA (pas de flèche directe entre ces deux états), car le mouvement du Translateur T de Gauche à Droite ou de Droite à Gauche ne peut s'effectuer que si l'Elévateur E est en position Haut. De même, lorsque le marqueur M est Avancé, les mouvements du Translateur T et de l'Elévateur E sont interdits.

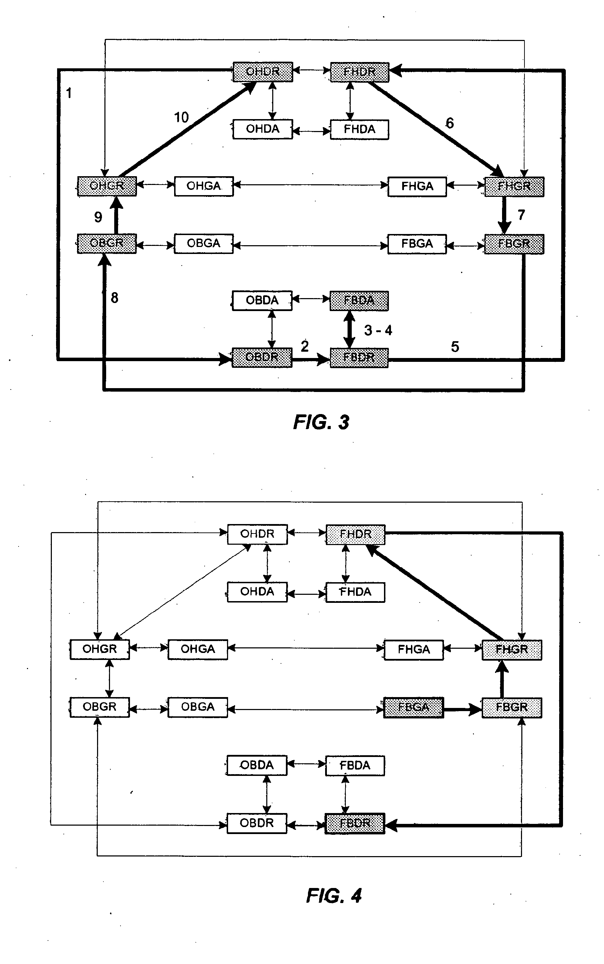

A partir de la représentation de la figure 2, la figure 3 montre le cycle nominal de fonctionnement du process automatisé. Ce cycle nominal est schématisé par des flèches en surépaisseur et par un numéro correspondant aux lignes du tableau 1. L'état initial et l'état final du cycle nominal est l'état OHDR.

Le procédé de commande comporte une étape de construction durant laquelle il faut modéliser la partie opérative. Pour cela, on construit un espace d'états réel de la partie opérative, cet espace d'états réel comprenant l'ensemble des états identifiés de la partie opérative et l'ensemble des transitions possibles entre les états de la partie opérative. Un état de la partie opérative est une combinaison des états identifiés des différents éléments qui composent cette partie opérative. L'étape de construction est généralement exécutée en amont dès le stade de la conception de la commande du process automatisé.

Selon l'invention, l'espace d'états réel comporte également les différents états de transformation du produit et les différents états de présence du produit durant le cycle nominal de fonctionnement du process. En référence à l'exemple du tableau 1, les états de présence du produit sont : Présence (ou absence) d'une pièce en zone d'entrée 20, Présence (ou absence) d'une pièce en zone de sortie 21, Présence (ou absence) d'une pièce 10 dans la pince P. Les états de transformation du produit sont : pièce 10 sur pince P à l'état Marqué (ou Non-marqué). L'introduction des états de transformation et de présence du produit permettra d'avoir une vision beaucoup plus réaliste de la situation du process au moment de l'interruption du cycle nominal, prenant en compte non seulement la partie opérative mais aussi le ou les produits présents dans le process à ce moment.

Pour construire cet espace d'états réel, on peut d'abord construire un espace des états théoriques de la partie opérative, comprenant l'ensemble des combinaisons existantes des états identifiés et des mouvements de la partie opérative. Puis à partir de cet espace d'états théorique, on construit l'espace d'états réel en tenant compte des contraintes mécaniques et des conditions de sécurité permanentes, de façon à exclure les cas présentant une impossibilité due à ces contraintes. On inclut ensuite dans l'espace d'états réel les différents états de transformation du produit et les différents états de présence du produit durant le cycle nominal de fonctionnement du process.

Le procédé de commande décrit par l'invention comporte également une étape de génération automatique d'une séquence de reprise optimisée qui est exécutée par l'unité de commande suite à une interruption du cycle nominal, lorsque l'on souhaite redémarrer le process.

Selon un premier mode de réalisation, l'invention prévoit que l'étape de construction comporte une phase de calcul d'une séquence de reprise optimisée pour tous les états appartenant à l'espace d'états réel. Ainsi, pour chaque état possible appartenant à l'espace d'états réel, on calcule une séquence de reprise optimisée permettant de rejoindre de façon optimisée un état de l'espace d'états réel appartenant au cycle nominal. Toutes les séquences de reprise ainsi calculées sont alors mémorisées dans une mémoire du système d'automatisme reliée à l'unité de commande.

A la suite d'une interruption du cycle nominal, l'étape de génération automatique comporte alors une phase de détermination d'un état en cours de l'espace d'états réel, dans lequel se situe le process au moment de l'interruption. L'état en cours se définit en effet comme étant l'état courant dans lequel se trouve la partie opérative, l'état courant de transformation du produit et l'état courant de présence du produit, au moment de l'interruption du cycle nominal.

L'étape de génération comporte ensuite une phase de sélection de la séquence de reprise correspondant à cet état en cours, parmi l'ensemble des séquences de reprise mémorisées. Ensuite, l'étape de génération comporte une phase d'exécution par l'unité de commande de la séquence de reprise sélectionnée, de façon à revenir dans un état de l'espace d'états réel appartenant au cycle nominal. Indifféremment, cette phase d'exécution peut être initialisée sous contrôle d'un opérateur, à l'aide de divers moyens de dialogue opérateur, tels que dispositif de réarmement, de redémarrage, d'acquittement défauts, de reprise pas-à-pas, etc...

Ce premier mode de réalisation consiste donc à prévoir tous les états possibles au stade de la conception de la commande, puis à effectuer les différents calculs des séquences de reprise au stade de la conception de la commande, pour tous les états possibles. Ces calculs peuvent donc être effectués en amont dans une machine plus puissante (par exemple une machine informatique) que l'unité de commande du système d'automatisme dont la puissance ne permet pas forcément de faire ces calculs. L'ensemble des séquences de reprise correspondant à tous les états possibles de l'espace d'états réel sont ensuite téléchargés et mémorisés dans une mémoire liée à l'unité de commande. Cette approche est donc principalement adaptée pour les process de petite taille, quand la mémoire et/ou la puissance de calcul l'unité de commande du système d'automatisme sont limités.

Selon un second mode de réalisation, l'invention prévoit que, suite à une interruption du cycle nominal, l'étape de génération automatique comporte une phase de détermination d'un état en cours de l'espace d'états réel. L'étape de génération comporte ensuite, à partir dudit état en cours déterminé, une phase de calcul d'une séquence de reprise optimisée vers un état de l'espace d'états réel appartenant au cycle nominal. Enfin, l'étape de génération automatique comporte une phase d'exécution par l'unité de commande de la séquence de reprise optimisée ainsi calculée, afin de revenir à un état de l'espace d'états réel appartenant au cycle nominal.

Dans ce second mode de réalisation, la phase de calcul est effectuée seulement pour l'état en cours déterminé. Elle est donc réalisée en temps réel et ne peut pas être préparée au préalable au stade de la conception. Elle nécessite donc soit une puissance de calcul importante de l'unité de commande du système d'automatisme, soit éventuellement la connexion permanente du système d'automatisme avec une machine capable d'effectuer ces calculs. Par contre, cette approche ne nécessite pas de mémoriser à l'avance toutes les différentes séquences de reprise possibles. Cette approche est donc bien adaptée aux systèmes d'automatisme ayant une capacité de traitement importante.

Si, au moment de l'interruption du cycle nominal, la partie opérative se trouve dans une situation inconnue, dans laquelle la phase de détermination ne permet pas de trouver un état en cours qui appartienne à l'espace d'états réel, alors le calcul ou la sélection d'une séquence de reprise optimisée ne sera pas possible. Dans ce cas, une reprise de cycle manuelle par un opérateur peut alors être nécessaire, de façon à prépositionner la partie opérative dans un état en cours appartenant à l'espace d'états réel.

Calculer une séquence de reprise optimisée consiste à trouver un plus court chemin permettant d'atteindre un état connu appartenant au cycle nominal, à partir d'un état en cours de l'espace d'états réel. Avantageusement, la séquence de reprise doit prendre en compte non seulement l'état courant de la partie opérative, mais aussi l'état courant de transformation et l'état courant de présence du produit. Dans le premier mode de réalisation présenté ci-dessus, la phase de calcul d'une séquence de reprise optimisée utilise préférentiellement un algorithme de type algorithme de Dijkstra ou de Bellman. Dans le second mode de réalisation, d'autres algorithmes d'exploration peuvent également être utilisés, comme par exemple un algorithme de type DFS (Depth Firth Search), BFS (Breadth First Search), A* (A star) ou autres.

La figure 4 donne un premier exemple de séquence de reprise optimisée (indiquée par des flèches en gras). Dans cet exemple, on suppose qu'une interruption du cycle nominal est intervenue alors que la partie opérative était dans l'état en cours "FBGA", c'est-à-dire Pince P Fermée, Elévateur E en Bas, Translateur T à gauche et Marqueur M Avancé. De plus, on suppose qu'au moment de l'interruption, l'état en cours indique qu'une pièce 10 est présente dans la pince P à l'état Non-marqué et qu'il n'y a pas de présence pièce en Entrée ni en Sortie.

Si l'on ne disposait pas de cette information donnant l'état de transformation pièce "pièce 10 non-marquée", alors il serait très simple de revenir à un état appartenant au cycle nominal puisqu'un passage de l'état "FBGA" à l'état "FBGR" suffirait. La séquence de reprise optimisée ne prévoirait uniquement qu'un recul du Marqueur M. Dans ce cas, le cycle nominal reprendrait alors à la ligne 7 du tableau 1, et le cycle nominal se terminerait par les lignes 8, 9 et 10. Néanmoins, le produit sortant du process serait alors défectueux, car n'ayant pas subi l'opération de marquage.

C'est pourquoi, en tenant compte non seulement de l'état en cours de la partie opérative, mais aussi de l'état en cours de présence pièce et de transformation pièce, la séquence de reprise optimisée va être la suivante : "FBGA" → "FBGR" → "FHGR" → "FHDR" → "FBDR". L'état final de la séquence de reprise "FBDR" correspond en effet à un état appartenant au cycle nominal (ligne 2 du tableau 1) qui permet d'effectuer le marquage de la pièce 10 par le Marqueur M. Une fois cette séquence de reprise optimisée effectuée, le cycle nominal pourra ainsi reprendre correctement à partir de la ligne 2.

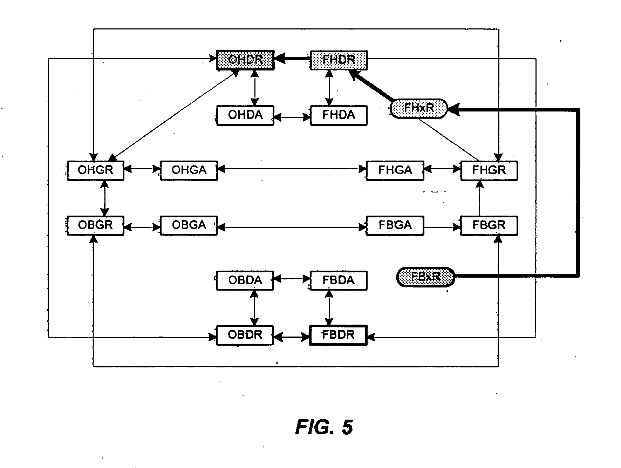

La figure 5 donne un second exemple de séquence de reprise optimisée. Dans cet exemple, on suppose qu'une interruption du cycle nominal est intervenue alors que la partie opérative était dans l'état en cours "FBxR", c'est-à-dire Pince P Fermée, Elévateur E en Bas, Marqueur M Reculé et Translateur T dans une position indéterminée x (c'est-à-dire par exemple une position intermédiaire qui correspond à une absence d'information d'un capteur de présence à Gauche et d'un capteur de présence à Droite du Translateur T). De plus, on suppose qu'au moment de l'interruption, l'état encours n'indique aucune présence pièce en Entrée ni dans la pince P.

Comme l'état du Translateur T est inconnu, les conditions de sécurité imposent alors que la séquence de reprise optimisée commence par une mise en position Haute de l'Elévateur E, car aucun mouvement du Translateur T ne sera sinon autorisé. L'état atteint est alors "FHxR". La séquence de reprise se poursuit alors par un mouvement vers la Droite du Translateur T pour atteindre une position connue "FHDR" permettant de revenir ensuite dans un état "OHDR" appartenant au cycle nominal compatible avec l'absence de pièce dans la pince P.

Cet exemple montre que, dans l'espace d'états réel de la partie opérative, il aurait été facilement possible de rajouter un 3^{ème} état du Translateur T : à savoir un état intermédiaire, correspondant à la position intermédiaire x en plus des positions Gauche et Droite. Cette adjonction aurait ainsi permis de traiter tout calcul de séquence de reprise optimisée faisant suite à une interruption du cycle nominal dans lequel l'état en cours du Translateur T est en position intermédiaire.

Par ailleurs, on voit que cette notion d'état intermédiaire permet avantageusement de définir des éléments de la partie opérative ne possédant pas uniquement deux états significatifs comme dans l'exemple traité, mais possédant trois états significatifs. Par extension et en restant dans le cadre de l'invention, on peut facilement élargir cette notion de façon à pouvoir intégrer des éléments de partie opérative ayant chacun par exemple une pluralité N d'états définis, correspondant à un ensemble de N valeurs numériques prédéterminées.

Il est bien entendu que l'on peut, sans sortir du cadre de l'invention, imaginer d'autres variantes et perfectionnements de détail et de même envisager l'emploi de moyens équivalents.

## Revendications

1. Procédé de commande d'un système d'automatisme qui comprend une unité de commande reliée à des capteurs et des actionneurs pour commander une partie opérative selon un cycle nominal de fonctionnement, laquelle partie opérative reçoit un produit à l'état entrant pour le transformer en un produit à l'état sortant, le procédé de commande comportant une étape de construction d'un espace d'états réel qui comprend l'ensemble des états de la partie opérative, l'ensemble des transitions possibles entre états de la partie opérative et l'ensemble des états de transformation du produit et des états de présence du produit, le procédé de commande comportant, à partir dudit espace d'états réel, une étape de génération automatique d'une séquence de reprise optimisée qui est exécutée par l'unité de commande suite à une interruption du cycle nominal, **caractérisé en ce que** la séquence de reprise optimisée consiste à trouver un plus court chemin permettant d'atteindre un état connu de l'espace d'états réel appartenant au cycle nominal, à partir d'un état en cours de l'espace d'états réel, dans lequel se trouve la partie opérative, l'état courant de transformation du produit et l'état courant de présence du produit, au moment de l'interruption du cycle nominal.

2. Procédé de commande selon la revendication 1, **caractérisé en ce que** l'étape de construction comporte, pour chaque état appartenant à l'espace d'états réel, une phase de calcul d'une séquence de reprise optimisée vers un état de l'espace d'états réel appartenant au cycle nominal.

3. Procédé de commande selon la revendication 2, **caractérisé en ce que** l'ensemble des séquences de reprise calculées pour chaque état de l'espace d'états réel est mémorisé dans une mémoire reliée à l'unité de commande.

4. Procédé de commande selon la revendication 3, **caractérisé en ce que** suite à une interruption du cycle nominal, l'étape de génération automatique comporte une phase de détermination d'un état en cours de l'espace d'états réel, une phase de sélection d'une séquence de reprise mémorisée correspondant audit état en cours déterminé, et une phase d'exécution par l'unité de commande de ladite séquence de reprise sélectionnée.

5. Procédé de commande selon la revendication 1, **caractérisé en ce que** suite à une interruption du cycle nominal, l'étape de génération automatique comporte une phase de détermination d'un état en cours de l'espace d'états réel, puis, à partir dudit état en cours déterminé, une phase de calcul d'une séquence de reprise optimisée vers un état de l'espace d'états réel appartenant au cycle nominal, et une phase d'exécution par l'unité de commande de ladite séquence de reprise optimisée.

6. Procédé de commande selon l'une des revendications 2 à 5, **caractérisé en ce que** la phase de calcul de la séquence de reprise optimisée utilise un algorithme de type algorithme de Dijkstra.

7. Système d'automatisme comprenant une unité de commande reliée à des capteurs et des actionneurs pour commander une partie opérative selon un cycle nominal de fonctionnement, **caractérisé en ce que** le système d'automatisme exécute un procédé de commande selon l'une des revendications précédentes.

## Claims

1. Control method for an automation system which comprises a control unit linked to sensors and actuators for controlling an operative portion according to a nominal operating cycle, which operative portion receives a product in the incoming state so as to convert it into a product in the outgoing state, the control method comprising a step of constructing a real space of states which comprises the set of states of the operative portion, the set of possible transitions between states of the operative portion and the set of conversion states of the product and presence states of the product, the control method comprising, on the basis of the said real space of states, a step of automatically generating an optimized resumption sequence which is executed by the control unit following an interruption of the nominal cycle, **characterized in that** the optimized resumption sequence consists in finding a shorter path making it possible to reach a known state of the real space of states belonging to the nominal cycle, from a current state, which the operative portion occupies, of the real space of states, the current conversion state of the product and the current presence state of the product at the moment of interruption of the nominal cycle.

2. Control method according to Claim 1, **characterized in that** the construction step comprises, for each state belonging to the real space of states, a phase of calculating an optimized resumption sequence towards a state of the real space of states belonging to the nominal cycle.

3. Control method according to Claim 2, **characterized in that** the set of resumption sequences calculated for each state of the real space of states is stored in a memory linked to the control unit.

4. Control method according to Claim 3, **characterized in that** following an interruption of the nominal cycle, the automatic generating step comprises a phase of determining a current state of the real space of states, a phase of selecting a stored resumption sequence corresponding to the said determined current state, and a phase of executing, by the control unit, the said selected resumption sequence.

5. Control method according to Claim 1, **characterized in that** following an interruption of the nominal cycle, the automatic generating step comprises a phase of determining a current state of the real space of states, and then, on the basis of the said determined current state, a phase of calculating an optimized resumption sequence towards a state of the real space of states belonging to the nominal cycle, and a phase of executing, by the control unit, the said optimized resumption sequence.

6. Control method according to one of Claims 2 to 5, **characterized in that** the phase of calculating the optimized resumption sequence uses an algorithm of the Dijkstra algorithm type.

7. Automation system comprising a control unit linked to sensors and actuators for controlling an operative portion according to a nominal operating cycle, **characterized in that** the automation system executes a control method according to one of the preceding claims.

## Patentansprüche

1. Verfahren zur Steuerung eines Automatisierungssystems, das eine Steuereinheit enthält, die mit Sensoren und mit Aktuatoren verbunden ist, um einen operativen Teil gemäß einem Nennbetriebszyklus zu steuern, wobei der operative Teil ein Produkt im Eingangszustand empfängt, um es in ein Produkt im Ausgangszustand umzuwandeln, wobei das Steuerverfahren einen Schritt der Konstruktion eines realen Raums von Zuständen aufweist, der die Gesamtheit der Zustände des operativen Teils, die Gesamtheit der möglichen Übergänge zwischen Zuständen des operativen Teils und die Gesamtheit der Umwandlungszustände des Produkts und der Anwesenheitszustände des Produkts enthält, wobei das Steuerverfahren ausgehend von dem realen Raum von Zuständen einen Schritt der automatischen Erzeugung einer optimierten Wiederaufnahmesequenz enthält, die von der Steuereinheit nach einer Unterbrechung des Nennzyklus ausgeführt wird, **dadurch gekennzeichnet, dass** die optimierte Wiederaufnahmesequenz darin besteht, einen kürzeren Weg zu finden, der es ermöglicht, einen zum Nennzyklus gehörenden bekannten Zustand des realen Raums von Zuständen ausgehend von einem ablaufenden Zustand des realen Raums von Zuständen, in dem sich der operative Teil befindet, vom laufenden Umwandlungszustand des Produkts und vom laufenden Anwesenheitszustand des Produkts im Moment der Unterbrechung des Nennzyklus zu erreichen.

2. Steuerverfahren nach Anspruch 1, **dadurch gekennzeichnet, dass** der Konstruktionsschritt für jeden zum realen Raum von Zuständen gehörenden Zustand eine Phase der Berechnung einer optimierten Wiederaufnahmesequenz zu einem zum Nennzyklus gehörenden Zustand des realen Raums von Zuständen aufweist.

3. Steuerverfahren nach Anspruch 2, **dadurch gekennzeichnet, dass** die Gesamtheit der für jeden Zustand des realen Raums von Zuständen berechneten Wiederaufnahmesequenzen in einem mit der Steuereinheit verbundenen Speicher gespeichert wird.

4. Steuerverfahren nach Anspruch 3, **dadurch gekennzeichnet, dass**, nach einer Unterbrechung des Nennzyklus, der Schritt der automatischen Erzeugung eine Phase der Bestimmung eines ablaufenden Zustands des realen Raums von Zuständen, eine Phase der Auswahl einer gespeicherten Wiederaufnahmesequenz entsprechend dem bestimmten ablaufenden Zustand, und eine Phase der Ausführung der ausgewählten Wiederaufnahmesequenz durch die Steuereinheit aufweist.

5. Steuerverfahren nach Anspruch 1, **dadurch gekennzeichnet, dass**, nach einer Unterbrechung des Nennzyklus, der Schritt der automatischen Erzeugung eine Phase der Bestimmung eines ablaufenden Zustands des realen Raums von Zuständen, dann ausgehend von dem bestimmten ablaufenden Zustand eine Phase der Berechnung einer optimierten Wiederaufnahmesequenz zu einem zum Nennzyklus gehörenden Zustand des realen Raums von Zuständen und eine Phase der Ausführung der optimierten Wiederaufnahmesequenz durch die Steuereinheit aufweist.

6. Steuerverfahren nach einem der Ansprüche 2 bis 5, **dadurch gekennzeichnet, dass** die Phase der Berechnung der optimierten Wiederaufnahmesequenz einen Algorithmus vom Typ Dijkstra-Algorithmus verwendet.

7. Automatisierungssystem, das eine mit Sensoren und Aktuatoren verbundene Steuereinheit enthält, um einen operativen Teil gemäß einem Nennbetriebszyklus zu steuern, **dadurch gekennzeichnet, dass** das automatische System ein Steuerverfahren nach einem der vorhergehenden Ansprüche ausführt.
